# EUROPEAN PATENT SPECIFICATION

(11) **EP 1 571 376 B1**
(45) Date of publication and mention of the grant of the patent: **02.01.2013**
(21) Application number: 05101643.4
(22) Date of filing: 03.03.2005
(51) Int. Cl.: F16H 61/18, F16H 59/04

(54) **Protection device to prevent the inadvertent engagement of the reverse gear in a vehicle transmission system**
Sicherheitvorrichtung zum Vermeiden eines unbeabsichtigen Schaltens in Rückwärtsgang für ein Kraftfahrzeugsgetriebe
Dispositif de sécurité contre l'enclenchement intempestif de la marche arrière d'une boîte de vitesses pour véhicules

(30) Priority: 05.03.2004 IT MI20040426
(43) Date of publication of application: 07.09.2005
(73) Proprietor: IVECO S.p.A., 10156 Torino (IT)
(72) Inventor: Contini, Umberto, 10155, TORINO (IT)
(74) Representative: Borsano, Corrado

(56) References cited:
- EP-A- 0 137 941
- EP-A- 0 872 666
- FR-A- 2 775 226
- GB-A- 2 347 181
- US-A- 3 031 898
- US-A- 3 597 992
- US-A- 3 974 711

## Description

### FIELD OF THE INVENTION

This invention relates to a protection device to prevent the inadvertent engagement of the reverse gear in a vehicle transmission system.

### BACKGROUND ART

A typical problem of all vehicle manual transmission systems consists of preventing the inadvertent engagement of the reverse gear, for example during normal use with the vehicle travelling forward since, apart from the fact that it is dangerous, this could also damage the transmission.

The most common method that is used to prevent the inadvertent engagement of the reverse gear consists of a tubular insert that is made to slide along the lever by the driver, who raises or lowers it to pass over a stop block that would otherwise prevent the lever from selecting the reverse gear.

Examples of such solutions are given in FR2775226, GB2347181, and EP0872666.

The document US 3 597 992 A discloses the features of the preamble of claim 1.

There are two basic gear shift configurations: one in which the reverse gear is on the same axis as another gear, for example in a classic gear shift pattern in a car where the reverse gear is opposite to the 5^{th} gear position or to the 1^{st} gear position, and the other in which the reverse gear is to the side, for example next to the 5^{th} or 1^{st} gear positions, on a separate axis.

Conventional protection devices can only be used in one of the two configurations described above. It is therefore necessary to optimize the production of such a device so that it is suitable for use in both gear shift patterns, thus reducing manufacturing costs and optimizing stock management.

### SUMMARY OF THE INVENTION

The purpose of this invention is to overcome all the drawbacks described above with a protection device to prevent the inadvertent engagement of the reverse gear in a vehicle transmission system that is suitable for use in all manual transmission system configurations.

This invention relates to a protection device to prevent the inadvertent engagement of the reverse gear in a vehicle manual transmission system, according to claim 1.

This invention relates in particular to a protection device to prevent the inadvertent engagement of the reverse gear in a vehicle transmission system, as described more fully in the claims, which are an integral part of this description.

### BRIEF DESCRIPTION OF FIGURES

The purposes and advantages of this invention will become clear from the following detailed description of a preferred embodiment (and the relative alternative forms of embodiment) and the drawings that are attached hereto, which are merely illustrative and not limitative, in which:
figures 1a and 1b are schematic diagrams of a top view of the device according to this invention in a transmission system with the reverse gear on the same axis as another gear, with the gear shift lever respectively in the neutral position and with the reverse gear engaged;
figures 2a and 2b are schematic diagrams of a top view of the device according to this invention in a transmission system with the reverse gear on a separate axis next to another gear, with the gear lever respectively in the neutral position and with the reverse gear engaged;
figures 3a, 3b, 4a, 4b are the relative schematic diagrams of the side views of the operation of the device.

In the drawings the same reference numbers and letters are used to identify the same elements.

### DESCRIPTION OF A PREFFERED EMBODIMENT OF INVENTION

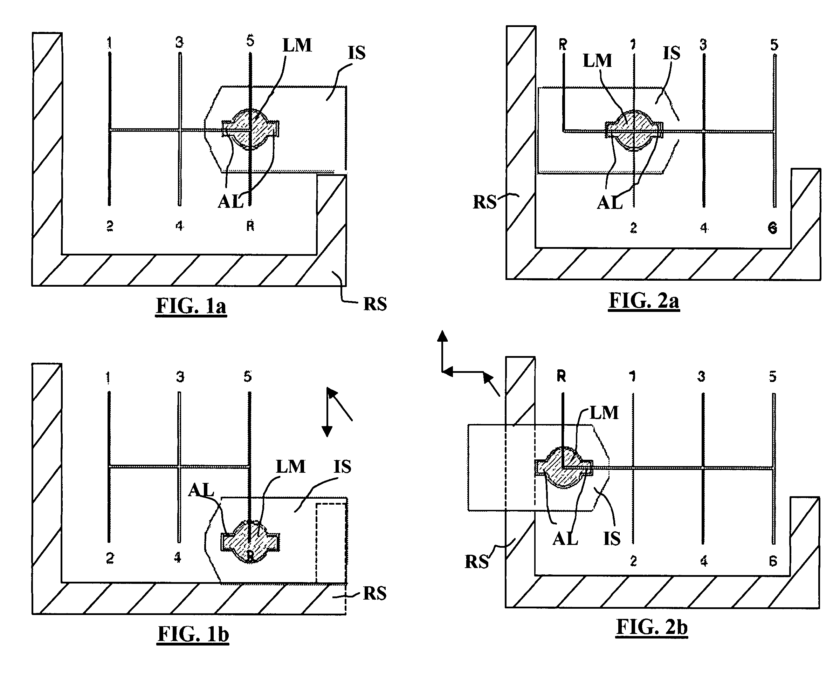

Figures 1a and 1b are schematic diagrams of a typical gear shift pattern in a manual transmission system, which may be synchronized, of the type with the reverse gear R on the same axis as the fifth gear, while other selection axes are present, for example that of the 1^{st} and 2^{nd} gear positions and that of the 3^{rd} and 4^{th} gear positions. There may be any number of additional selection axes.

LM indicates a top sectional view of a gear shift lever (shaded in the figure): the lever has two side flanges AL.

There is a protection insert IS that is placed inside the lever LM in correspondence with the side flanges AL; there is a slot in the insert, the shape of which is complementary to that of the cross-section of the lever, so that the two flanges AL on the lever fit into corresponding recesses in the slot. The flanges prevent any torsion of the insert during operation in relation to the gear shift lever.

The protection insert IS includes a lateral projection that extends towards the outside of the gear shift pattern, for example it may be rectangular in shape, even if other forms are possible without restriction. Moreover, it must be free to move along a specific vertical axis. This may be achieved by integrating it with the gear shift lever, if this can also effect such stroke, otherwise it may be integrated with a tubular insert that is coaxial with the lever, and that is made to slide along such lever by the driver, in order to engage the reverse gear R.

There is also a fixed stop block RS, for example as a part of the housing of the gear shift lever. The stop block RS can be advantageously embodied in the same way for all the possible forms of the gear shift, for example U-shaped, as shown in the figures 1 a-2b, surrounding the gear shift lever area.

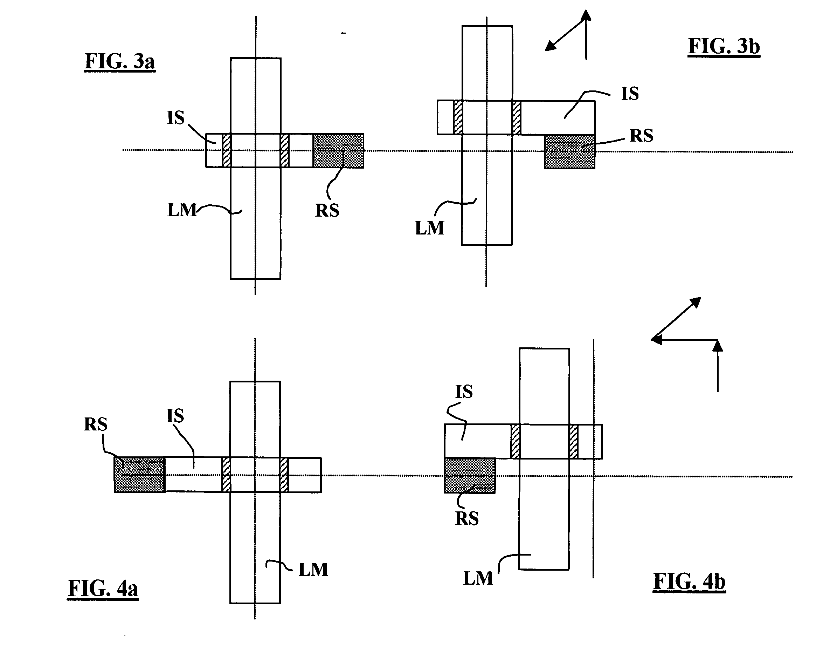

In the case of the position of the reverse gear R aligned with another gear, as illustrated in figures 1 a and 1 b, the part of the stop block RS near to the position of the reverse gear is on a different axis and to the side in relation to the pattern of the neutral line, vertically aligned with the protection insert IS. During the normal forward/backward movement of the lever to select the gears, the protection insert IS (fig. 1a) comes into contact with the stop block RS if an attempt is made to engage the reverse gear R, thus preventing the engagement of such gear. In order to engage the reverse gear, the protection insert is first put in vertical movement (fig. 1 b), so as to be above or under the stop block RS, as illustrated respectively in figures 3a and 3b. This vertical movement may consist of an upward or downward movement, according to the possible embodiments of the box of the gear lever. Then the lever with the protection insert is free to be moved above the stop block and the reverse gear can be engaged.

In other equivalent embodiments of this invention, with reference to that illustrated in figures 1 a and 1 b, the position of the reverse gear R may be on any one of the four sides of the gear shift pattern, according to the specific embodiment of the gear box. The stop block RS will obviously be in a different position, but the same protection insert IS can still be used, possibly rotated by 180°.

Figures 2a and 2b are schematic diagrams of a typical gear shift pattern in a manual transmission system, possibly synchronized, of the type in which the position of the reverse gear R is on a side axis with respect to that of the 1^{st} and 2^{nd} gear positions, while there are also other axes, for example that of the 3^{rd} and 4^{th} gear positions and of the 5^{th} and 6^{th} gear positions, and there may be any number of additional axes.

In this case the same protection insert IS and stop block RS as the previous embodiment can be used. However, in this case the part of the fixed stop block near to the reverse gear, is placed to the side and aligned with the neutral line of the gear shift pattern.

Also in this case, during the normal forward/backward movement of the lever to select the gears, the protection insert IS (fig. 2a) comes into contact with the stop block RS, if an attempt is made to move the lever sideways along the neutral line, to engage the reverse gear R, thus preventing the engagement of such gear. Once again, in order to engage the reverse gear, the protection insert IS (fig. 2b) must be first moved vertically, and then laterally, so that it passes over the stop block RS, as illustrated in figures 4a and 4b. This vertical movement may consist of an upward or downward movement, according to the possible embodiments of the box of the gear lever.

In equivalent embodiments of the invention, with reference to that illustrated in figures 2a and 2b, the position of the reverse gear may be on any one of the four sides of the gear shift pattern, according to the specific embodiment of the gear box. The stop block RS will obviously be in a different position and orientation, but the same protection insert and stop block can still be used, possibly rotated by 180°.

The protection insert can thus be made to function in two ways: when the reverse gear is not on the same axis as another ratio it is used to ensure that the gear shift lever cannot select the reverse gear position, unless the insert is raised. Alternatively, when the reverse gear is on the same axis as another ratio, given the shape of the stop block, the lever can always select the relative position but cannot move towards the reverse gear without the driver having first raised the insert.

In particular it is apparent that the protection insert (IS) and stop block (RS) may be of any configuration, according to specific construction requirements in relation to the various components of the gear shift lever assembly, provided they comply with the principles set forth above, and that it will be possible for the person skilled in the art to embody the invention without introducing any further construction details.

## Claims

1. Protection device to prevent the inadvertent engagement of the reverse gear in a vehicle manual transmission system, said transmission system having a gear shift lever (LM) that moves horizontally according to a gear shift pattern (R, 1, 2, 3, 4, 5, 6), a reverse gear (R) position being provided in said gear shift pattern, the position of said reverse gear (R) being sidewise in the shift pattern either on the same axis as another gear (5) or on a separate axis to the side of another gear axis (1-2), said shift pattern has a neutral axis,
said protection device comprising:
- a protection insert (IS) mounted on said gear shift lever (LM) such that they move together, the protection insert (IS) having a lateral projection extending towards the outside of the gear shift pattern along an axis parallel to the neutral axis of said gear shift pattern, said protective insert (IS) can be caused to move vertically along a longitudinal axis of said gear shift lever (LM); and
- a fixed stop block (RS), engageable with said protection insert (IS) when coming into contact with said protection insert (IS) during the horizontal movement of the gear shift lever (LM), thus blocking the further horizontal movement of the gear shift lever (LM) and thereby preventing the engagement of the reverse gear (R), while the vertical movement of said protection insert (IS) caused by the vertical movement of said gear shift lever (LM) enables said protection insert (IS) to pass over said stop block (RS), so enabling the engagement of the reverse gear (R);
said protection device being **characterized in that**:
said fixed stop block (RS) is U-shaped and surrounds said gear shift pattern, whereby said fixed stop block (RS) is mountable in different positions and orientations according to the gear shift pattern; and said protection insert (IS) is provided with a slot having a shape complementary to a cross section of the gear shift lever (LM), so that said protection insert (IS) can be mounted on the gear shift lever (LM) either in one orientation or in the opposite orientation according to the position of the reverse gear (R), so that the same protective device can be used in different gear shift pattern configurations by a simple different mounting orientation.

## Patentansprüche

1. Schutzvorrichtung, um das versehentliche Einlegen des Rückwärtsgangs in einem Handschaltgetriebesystem eines Fahrzeugs zu verhindern, wobei das Getriebesystem einen Gangschalthebel (LM) aufweist, der sich horizontal entlang einem Gangschaltschema (R, 1, 2, 3, 4, 5, 6) bewegt, wobei eine Position eines Rückwärtsgangs (R) in dem Gangschaltschema vorgesehen ist, wobei die Position des Rückwärtsgangs (R) seitlich in dem Schaltschema entweder auf der gleichen Achse wie ein weiterer Gang (5) oder auf einer separaten Achse auf der Seite einer anderen Gangachse (1-2) liegt, wobei das Schaltschema eine neutrale Achse aufweist,
wobei die Schutzvorrichtung umfasst:
- einen Schutzeinsatz (IS), der derart an den Gangschalthebel (LM) montiert ist, dass sie sich gemeinsam bewegen, wobei der Schutzeinsatz (IS) einen seitlichen Vorsprung aufweist, der sich in Richtung der Außenseite des Gangschaltschemas entlang einer Achse parallel zu der neutralen Achse des Gangschaltschemas erstreckt, wobei der Schutzeinsatz (IS) dazu gebracht werden kann, sich vertikal entlang einer Längsachse des Gangschalthebels (LM) zu bewegen; und
- einen festen Anschlagblock (RS), der mit dem Schutzeinsatz (IS) in Eingriff gebracht werden kann, wenn er während der horizontalen Bewegung des Gangschalthebels (LM) mit dem Schutzeinsatz (IS) in Kontakt gelangt, wodurch die weitere horizontale Bewegung des Gangschalthebels (LM) blockiert und dadurch die Einrückung des Rückwärtsgangs (R) verhindert wird, während die vertikale Bewegung des Schutzeinsatzes (IS), die durch die vertikale Bewegung des Gangschalthebels (LM) bewirkt wird, ermöglicht, dass der Schutzeinsatz (IS) über den Anschlagblock (RS) hinwegtreten kann, um die Einrückung des Rückwärtsgangs (R) zu ermöglichen;
wobei die Schutzvorrichtung
**dadurch gekennzeichnet** t ist, dass der feste Anschlagblock (RS) U-förmig ist und das Gangschaltschema umgibt, wobei der feste Anschlagblock (RS) in unterschiedlichen Positionen und Orientierungen gemäß dem Gangschaltschema montierbar ist; und der Schutzeinsatz (IS) mit einem Schlitz versehen ist, der eine Form aufweist, die komplementär zu dem Querschnitt des Gangschalthebels (LM) ist, so dass der Schutzeinsatz (IS) an dem Gangschalthebel (LM) entweder in der einen Orientierung oder in der entgegengesetzten Orientierung gemäß der Position des Rückwärtsgangs (R) montiert sein kann, so dass die gleiche Schutzvorrichtung durch eine einfache unterschiedliche Montageorientierung in unterschiedlichen Gangschaltschemakonfigurationen verwendet werden kann.

## Revendications

1. Dispositif de protection pour empêcher l'enclenchement involontaire de la marche arrière dans un système de transmission manuelle de véhicule, ledit système de transmission ayant un levier de changement de vitesse (LM) qui se déplace horizontalement selon une grille de changement de vitesse (R, 1, 2, 3, 4, 5, 6), une position de marche arrière (R) étant prévue dans ladite grille de changement de vitesse, la position de ladite marche arrière (R) étant sur le côté dans la grille de changement de vitesse soit sur le même axe qu'une autre vitesse (5) soit sur un axe séparé sur le côté d'un autre axe de vitesse (1-2), ladite grille de changement de vitesse a un axe neutre,
ledit dispositif de protection comprenant :
- un insert de protection (IS) monté sur ledit levier de changement de vitesse LM de sorte qu'ils se déplacent ensemble, l'insert de protection (IS) ayant une protubérance latérale s'étendant vers l'extérieur de la grille de changement de vitesse le long d'un axe parallèle à l'axe neutre de ladite grille de changement de vitesse, ledit insert de protection (IS) peut être amené à se déplacer verticalement le long d'un axe longitudinal dudit levier de changement de vitesse (LM) ; et
- une butée fixe (RS), pouvant être enclenchée avec ledit insert de protection (IS) lorsqu'elle vient en contact avec ledit insert de protection (IS) pendant le mouvement horizontal du levier de changement de vitesse (LM), bloquant ainsi le mouvement horizontal supplémentaire du levier de changement de vitesse (LM) et empêchant ainsi l'enclenchement de la marche arrière (R), tandis que le mouvement vertical dudit insert de protection (IS) provoqué par le mouvement vertical dudit levier de changement de vitesse (LM) permet audit insert de protection (IS) de passer par-dessus ladite butée (RS) permettant ainsi l'enclenchement de la marche arrière (R) ;
ledit dispositif de protection étant **caractérisé en ce que** :
ladite butée fixe (RS) est en forme de U et entoure ladite grille de changement de vitesses, moyennant quoi ladite butée fixe (RS) peut être montée dans des positions et des orientations différentes selon la grille de changement de vitesse ; et ledit insert de protection (IS) est doté d'une fente ayant une forme complémentaire à une section transversale du levier de changement de vitesses (LM), de sorte que l'insert de protection (IS) peut être monté sur le levier de changement de vitesse (LM) dans une orientation ou dans l'orientation opposée selon la position de la marche arrière (R), de sorte que le même dispositif de protection peut être utilisé dans des configurations de grille de changement de vitesses par une simple orientation de montage différente.
